# EUROPEAN PATENT APPLICATION

(11) **EP 1 189 386 A2**
(43) Date of publication of application: **20.03.2002**
(21) Application number: 01112593.7
(22) Date of filing: 23.05.2001
(51) Int. Cl.: H04L 12/28, H04L 29/06, H04L 12/10

(54) **Protocol conversion connector of communication network-adapted type and indoor communication network system**

(30) Priority: 31.08.2000 JP 2000262853; 08.09.2000 JP 2000272971
(71) Applicant: Matsushita Electric Works, Ltd., Kadoma-shi, Osaka (JP)
(72) Inventor: Maeda, Ryuichi, Matsushita Electric Works, Ltd., Kadoma-shi, Osaka (JP); Koise, Syoji, Matsushita Electric Works, Ltd., Kadoma-shi, Osaka (JP); Ookage, Satoshi, Matsushita Electric Works, Ltd., Kadoma-shi, Osaka (JP); Fujiwara, Noriaki, Matsushita Electric Works, Ltd., Kadoma-shi, Osaka (JP)
(74) Representative: Sajda, Wolf E., Dipl.-Phys.

(57) **Abstract**

A new network-adapted type protocol conversion connector with a function for converting the protocol for control signals sent and received between an indoor high-functional network laid in office buildings or dwelling houses and low-functional network-adapted appliances such as household electric appliance and facility, and an indoor communication network system using the connector. In the preferred embodiment, the protocol conversion connector comprises a primary connecting portion to be connected to the communication network laid indoors, a secondary connecting portion to be connected to a network-adapted appliance, a protocol conversion interface to convert the protocol for control signals sent and received between the communication network and the network-adapted appliance, and a feeder connecting portion to feed electric power to the network-adapted appliance to be connected to the secondary connecting portion. More improved and extended connectors designed for use in power line carrier system or wireless communication system are also disclosed as preferred its embodiments.

## Description

### BACKGROUND OF THE INVENTION

### 1. Field of the Invention

The present invention relates to a newly developed connector with protocol conversion function for transmitted signals and an indoor communication network system. More particularly, the present invention concerns a connector adapted for attaching to a high-functional communication network so constructed that various low-functional network-adapted appliances can be used as object of control of outdoor and indoor communication networks by connecting the high-functional communication network to the low-functional network-adapted appliances and an indoor communication network system so made as to improve the operation or the handling of various network-adapted appliances connected to the indoor communication network.

### 2. Description of the Related Art

Recently, such communication device utilizing embedded type micro Internet interface so designed as to connect household electric appliances and facility machinery to the Internet have been developed as disclosed in U.S. Pat. No. 5991795. Being embedded this communication device in facilities and equipment such as household electric appliances and lighting fixtures and the like, two-way communication with the communication server installed in the house or the Internet can be made possible using communication protocol employed as used in the Internet communication. Thus that will make it possible to remote-control various facilities and equipment installed indoors or to collect various data on them by the communication server over the Internet and, furthermore, to enable two-way communicate with outside communication server over the Internet.

However, in the view of technical aspects, it is not so difficult to embed such communication devices in the facilities and the equipment as mentioned above, but considering their cost, it would not be so advantageous to embed such devices in appliances and facilities of low-functional or low-priced, such as general household electric appliances.

Furthermore, facilities and equipment, even if designed for the low-functional network, they would not be able to be used by merely connecting them to a high-functional network as connected to a communication server, due to the difference of the protocol for control signals to be transmitted therebetween. Thus it is necessary to add a communication interface adapted for each protocol or replace such facilities or equipment with other ones with devices adapted for those.

On the other hand, many of facilities and equipment used under the connection to the indoor communication network are so designed as to set individual users' information in order to facilitate their operation and handling, like as in household electric appliances designed for setting current time, video deck, or rice boiler capable of setting reservation with a timer, audio equipment capable of setting of sound volume, the selection of mode, considering users convenience, therefore such users' information is usually stored on the memory provided in the above facilities and equipment.

Many of those memories for such purposes are volatile, thus if the power supply is cut off, all the information on the memories will become extinct or be cleared. To prevent that, the power plug of the electric appliance has to be left inserted into the wall outlet even when the appliance is not used so that the contents stored on memories are kept by applying standby power to them.

However, if the plug is left inserted into the wall outlet, electricity is consumed even when the appliance is not used, thus in such case, even if they are power-saving appliances, it would not expect to save power for such appliances.

Some appliances use dry batteries for keeping the information stored on such volatile memories, however such ones always need dry batteries, in addition in the event that the dry batteries have run down, there would occur the problem of erasing all the information stored on the memories, thus such means is so inconvenient any way.

### SUMMARY OF THE INVENTION

In view of the above circumstances, the present invention is proposed to make the recent communication network a more pleasant environment.

Accordingly, it is a primary object of the present invention to provide a protocol conversion connector so designed for connecting high-functional communication network system laid indoors as connected to a communication server to low-functional network-adapted appliances such as home appliances and lighting fixtures, in which relatively low-priced communication devices are embedded, to use the latter as the controlling and communication objects of the former.

It is second object of the present invention to provide an indoor communication network system so designed to be excellent in power saving effect and facilitate the use or the operation of network-adapted appliances connected indoor communication network system.

To achieve the above primary object, a connector of network-adapted type with protocol conversion function is proposed as the present invention, wherein the connector comprises a primary connecting portion to be connected to the communication network laid indoors, a secondary connecting portion to be connected to a network-adapted appliance, a protocol conversion interface to convert the protocol for control signals to be sent and received between the communication network and the network-adapted appliance, and a feeder connecting portion to feed electric power to the network-adapted appliance to be connected to the secondary connecting portion.

To achieve the second object, furthermore, the present invention provides an indoor communication network system to be used by connecting to outside communication networks such as the Internet, wherein indoor communication system of the present invention comprises a communication network to which a communication server and plural network-adapted appliances, each set an individual communication address, are connected and laid in buildings such as office building, dwelling house, and the like, each of the network-adapted appliance comprises a memory for temporarily storing user setting information registered individually, and wherein the communication server detects the activation of power to network-adapted appliances connected to the communication network, and is provided with a user setting information storing table for registering and storing user setting information temporarily saved on the memories of the network-adapted appliances, whereby the communication server, when user setting information is written or rewritten on the memory of any one of the network-adapted appliances, receives user setting information from the corresponding network-adapted appliance and stores the information on the table, and further the communication server detects the activation of power to any one of the network-adapted appliances, the communication server reads out the corresponding user setting information registered and stored for the corresponding network-adapted appliance from the table to enable the network-adapted appliance to write the user setting information on its memory.

The above-mentioned connector with a function of protocol conversion of the present invention involves three preferred embodiments.

In the first embodiment, the connector is adapted for use in an indoor communication network such as an information wire laid indoors and includes a primary connecting portion to be connected to information wire and a feeder connecting portion to supply electric power to network-adapted appliances.

In the second embodiment, the connector is adapted for use in an indoor communication network such as an power line to which power line carrier signals superimposed control signals and power source are transmitted and includes a primary connecting portion to be connected to the power line and a feeder connecting portion to supply electric power to network-adapted appliances.

In the third embodiment, the connector is adapted for use in wireless communication network laid indoors and includes a wireless signal processing unit to be wirelessly connected to a wireless communication server and a feeder connecting portion to supply electric power to network-adapted appliances.

The system proposed as the present invention includes also three preferred types embodiments, i.e. information wiring network system, power line-carrier indoor information network system, and wireless indoor information network system.

In the first embodiment, the indoor communication net work comprises an information wire to which a protocol conversion connectors is attached at a suitable place, whereby when the communication server detects the activation of power to any one of the network-adapted appliances, the communication server reads out and sends out to the information wire the corresponding user setting information registered and stored for the corresponding network-adapted appliance from the user setting information memory to enable the network-adapted appliance to write the user setting information on its device memory.

In the second embodiment, the indoor network comprises a power line to which a communication server installed indoors is connected and control signals is transmitted together with electric power, whereby when the communication server detects the activation of power to any one of the network-adapted appliances, the communication server reads out and sends out to the power line the corresponding user setting information registered and stored for the corresponding network-adapted appliance from the user setting information memory to enable the network-adapted appliance to write the user setting information on its device memory.

In the third embodiment, the indoor network comprises a wireless communication system in which radio signals are sent and received between a wireless communication server installed indoors and wireless signal processing units provided at a protocol conversion connector for controlling the network-adapted appliances, whereby when the wireless communication server detects the activation of power to any one of the network-adapted appliances, the wireless communication server reads out the corresponding user setting information registered and stored for the corresponding network-adapted appliance from the user setting information memory and converts it into radio signals then sends out it to the wireless communication system to enable the network-adapted appliance to write the user setting information on its device memory.

Still further aspects and advantages of the invention will be more apparent from the following description.

It should be also understood that the present invention is not limited to the embodiments disclosed in the specification and it goes without saying that variations may be made without departing from the spirit and scope of the present invention.

### BRIEF DESCRIPTION OF THE DRAWINGS

Fig.1 is a schematic diagram construction of a home network system to which a protocol conversion connector of the present invention is applied.
Fig.2a shows basic construction of the protocol conversion connector and Fig.2b is a schematic diagram showing its inner construction.
Fig.3a - Fig.3c show outside views of the protocol conversion connector, wherein Fig.3a shows one example of the protocol conversion connector mounted on the wall, Fig.3b shows another example of the protocol conversion connector mounted on the wall, and Fig.3c shows one example of the protocol conversion connector mounted on the ceiling.
Fig.4a and Fig.4b show other example of the protocol conversion connector explaining how to use respectively
Fig. 5 is a schematic diagram of a home network system adapting a protocol conversion connector capable of setting positional information.
Fig.6a is a display sample showing addresses of a protocol conversion connector and its positional relation, and Fig.6b is a display sample showing addresses of a protocol conversion connector on a floor plan of a house.
Fig.7 is a schematic diagram showing detailed information display of a protocol conversion connector.
Fig.8 shows construction of home network incorporating a mobile terminal device.
Fig.9a - Fig.9c are examples of a protocol conversion connector provided with additional functional means, wherein Fig.9a shows an example of the protocol conversion connector provided with a power cut-off circuit, Fig.9b is an example of the protocol conversion connector corresponding to power line carrier signals, and Fig.9c is an example of the protocol conversion connector corresponding to radio transmission.
Fig.10 is an example of construction of an indoor communication network system of the present invention.
Fig.11 shows an example of inner construction of a user setting information storing memory provided for a communication server.
Fig.12 is a flow chart showing basic operations of network-adapted appliances and a communication server according to the present invention.
Fig.13 is an example of construction of an indoor communication network system incorporating a protocol conversion connector.
Fig.14 shows an example of construction of a power line carrier type indoor communication network system of the present invention.
Fig.15 shows an example of construction of wireless type indoor communication network system of the present invention.

### PREFERRED EMBODIMENTS OF THE INVENTION

Now preferred embodiments of a protocol conversion connector of the present invention are explained.

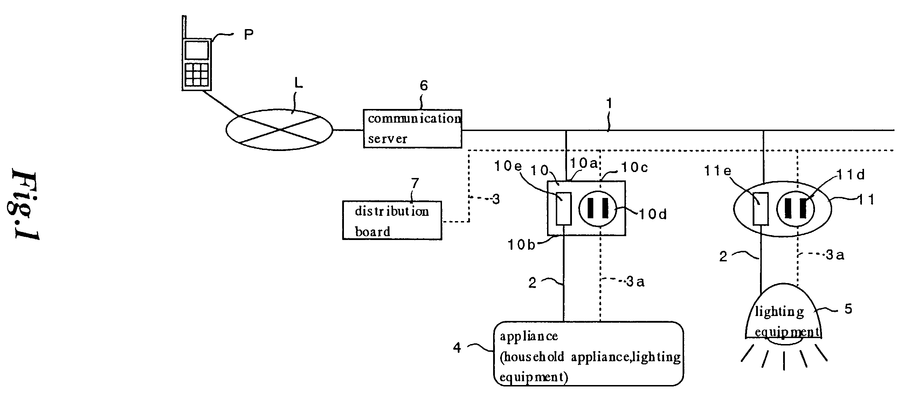

Fig. 1 is a schematic diagram of a home network system to which a protocol conversion connector of the present invention is applied.

A communication server 6 is equipped in a dwelling house and information wire for communication network 1 is connected to a primary connecting portion 10a of a protocol conversion connector 10 so that the protocol conversion connector 10 and the communication server 6 can be connected each other in two-way communication.
Network-adapted appliances 4 such as electrical household appliances are connected to a secondary connecting portion 10b via a control line 2.

Lighting equipment 5 is connected to a lighting protocol conversion connector 11 provided at a ceiling so as to be able to communicate with the communication server 6 in two-way communication. The electrical household appliance 4 and the lighting equipment 5 are also able to execute two-way communication via two protocol conversion connectors 10, 11 and the information wire 1.

The network-adapted appliance 4 includes air-conditioning equipment, communication equipment, security equipment, and factory facility equipment other than electrical household appliance and lighting equipment.

On the other hand the communication server 6 is connected to public line and cable TV line for the Internet L.

According to the above-mentioned home network system, control signals can be transmitted using a communication network such as the Internet L from an outdoor mobile terminal device P to an indoor network-adapted appliances 4, 5. Contrary, information of the network-adapted appliances 4, 5 can be transmitted to the mobile terminal device P via the Internet L. Such a protocol conversion connector 10 can be used by directly connecting an outdoor communication network except for sending and receiving signals to the communication server 6.

In Fig.1, the protocol conversion connector 10 is provided with a power input terminal 10c connected to a power line 3 introduced from an electric distribution board 7 installed indoor, and a feeder connecting portion 10d for feeding electric power to the network-adapted appliance 4 via an electric supply line 3a. The information wire 1 is comprised of a private line such as the Ethernet, RS485, and CAN, however it may be wireless such as infra-red radiation or known Bluetooth method.

In case of constructing a communication network by means of wireless system or power line carrier technology, which are mentioned later, it is constructed by connecting the power line 3, the control line 2, and the electric supply line 3a without using the information wire 1 shown in Fig.1 because the protocol conversion connector can carry the control signals by using a power line.

According to the protocol conversion connector 10 of the present invention, two-way high-functional n-to-1 communication is executed via the information wire 1 connected to the primary connecting portion 10a between the communication server 6 connected on the communication network. On the other hand, one to one normal communication is executed between the network-adapted appliances 4, 5 connected to the secondary connecting portion 10b.

Further, such a protocol conversion connector may be provided with plural secondary connecting portions as described later and 1-to-n normal communication may be executed for plural network-adapted appliances 4, 5.

According to such a protocol conversion connector, communication network connection of low price appliances can be achieved with realistic cost.
It is enough that the network-adapted appliances 4, 5 are incorporated with low price communication device capable of normal communication so that whole appliance doesn't become heavy price. Also network-adapted appliances can be used as they are only by replacing a protocol conversion connector when communication method is changed.

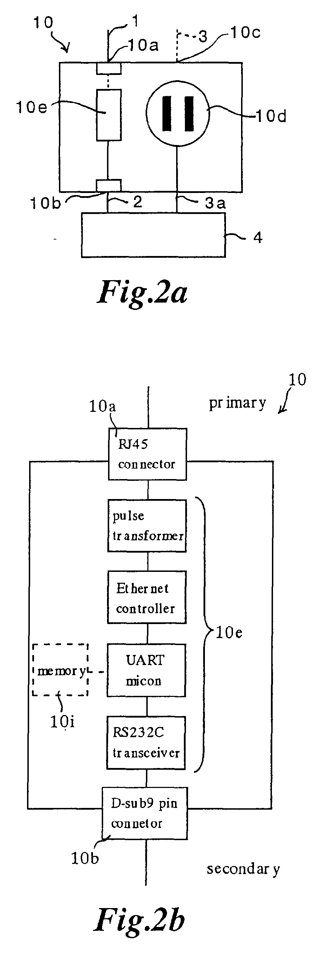

Fig.2a and Fig.2b show basic construction of the protocol conversion connector.

The protocol conversion connector 10 shown in Fig.2a shows the most basic construction.

Such a protocol conversion connector 10 is provided with the primary connecting portion 10a in order to send and receive control signals between the network connected with the communication server 6 and is provided with the secondary connecting portion 10b in order to send and receive control signals between the network-adapted appliance 4. The control signals sent and received between the primary connecting portion 10a and the control signals sent and received between the secondary connection portion 10b are constructed so as to be communicated by converting protocol each other at a protocol conversion interface 10e provided in between. In Fig.2a, the feeder connecting portion 10d for connecting a power source supplied by being connected to the power line 3 to the secondary connecting portion 10b, and feeding electricity to the network-adapted appliance 4 via the electric supply line 3a is provided. However, such a feeder connecting portion 10d isn't essential in the present invention.

For example as shown in Fig.2b, the protocol conversion interface 10e includes a device such as pulse transformer, the Ethernet controller, UART microcomputer, and RS232C transceiver in order to convert protocol each other between a primary high-functional communication method (the Ethernet) and a secondary normal communicationmethod (RS232C). When the control signals sent and received via the primary connecting portion 10a and the control signals sent and received via the secondary connecting portion 10b are different, mutual communication can be executed because of such a protocol conversion function. The reference numeral 10i is a memory for storing positional information, described later, and is added if necessary.

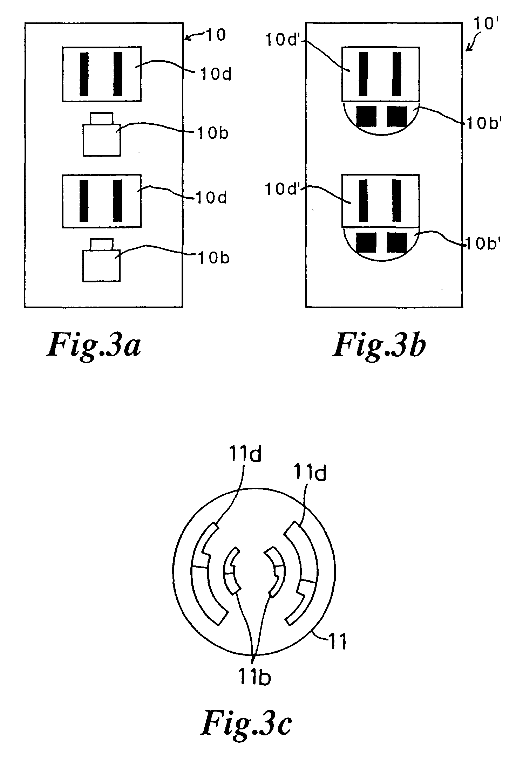

Fig.3a and Fig.3b show outside view of the protocol conversion connector.

Fig.3a is a wall mounted type in which two sets of an outlet type feeder connecting portion 10d are correspondingly provided for modular type secondary connecting portions 10b. Fig.3b is a wall mounted type in which a secondary connecting portion 10b' and a feeder connecting portion 10d' are combined and provided. Either type is constructed such that a primary connecting portion (not shown) is connected to a signals line wired in a wall, the network-adapted appliance 4 connects the control line (shown as a reference numeral 3a in Fig.1) introduced therefrom to the modular type secondary connecting portion 10b, 10b', and the control line is inserted into a feeding plug to be connected to the feeder connecting portion 10d, 10d' so as to receive power supply.

The protocol conversion connector shown in Fig.3c is used for lighting equipment 11. A primary connecting portion (not shown), a secondary connecting portion 11b and feeder connecting portion 11d are provided for a conventional hanging type ceiling structure and further a protocol conversion interface is incorporated therein.

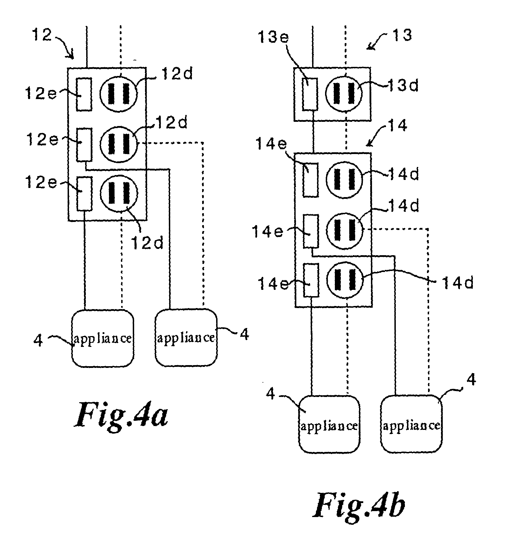

Fig.4a and Fig.4b show an example how the protocol conversion connector is used. The protocol conversion connector 12 shown in Fig.4a is constructed such that three sets of secondary connecting portion, corresponding feeder connecting portions 12d, and protocol conversion interfaces 12e corresponding to them are provided in one body. In Fig.4b a connector body 14 in which three sets of secondary connecting portions, feeder connecting portions 14d, and protocol conversion interfaces 14e are provided and one protocol conversion connector 13 are connected in series .

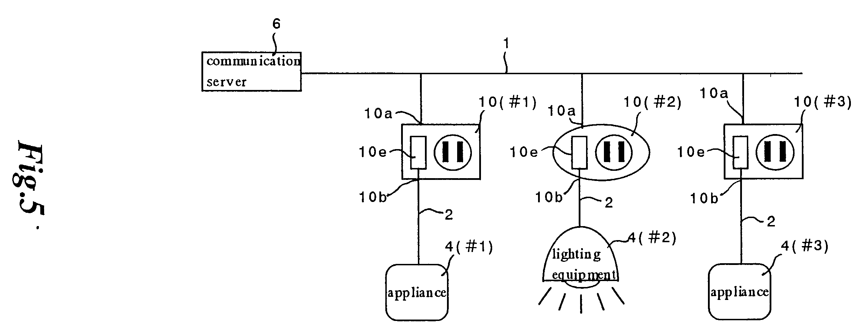

Next, a protocol conversion connector in which positional information on a communication network is set is explained. Fig.5 is a schematic diagram of a home network system adapting such a protocol conversion connector.

The network-adapted appliances 4 (#1-3) are connected to each secondary connecting portion 10b of the protocol conversion connectors 10(#1-3) via control lines 2, and the communication server 6 is connected to the primary connecting portion 10a via the information wire 1.

Each protocol conversion connectors 10 (#1-3) are provided with a memory (10i in Fig.2b), in which positional information thereof is stored.

The positional information is set corresponding to the room in which protocol conversion connectors 10(#1) - (#3) are provided, 10(#1) : "living room on the first floor -1", like 10 (#2) : "living room on the first floor-2", 10 (#3) : "kitchen on the first floor" .

According to such protocol conversion connector 10(#1-3) capable of storing positional information, if the control signals from the network-adapted appliances 4(#1-3) is added with an individual communication address and positional information allotted to each protocol conversion connector 10 (#1-3) and is transmitted to the communication server 6, setting position and operational condition of each network-adapted appliances 4 (#1-3) can be comprehended in the communication server 6.

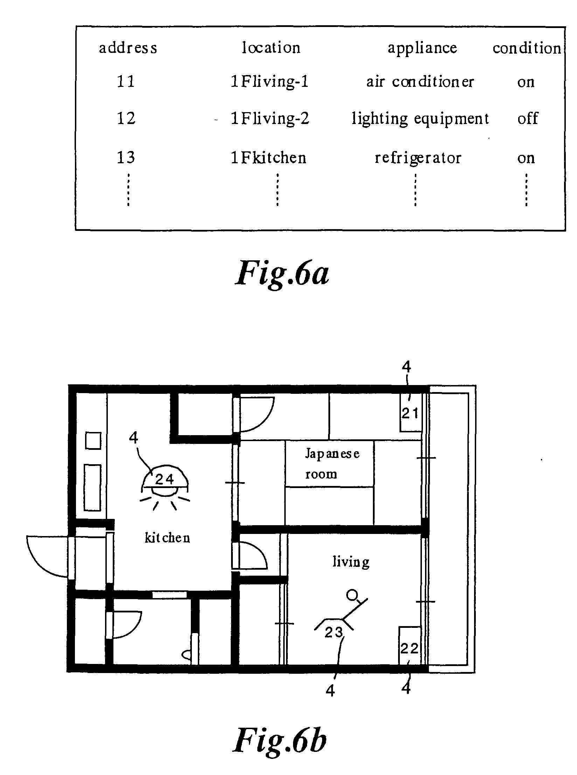

In case of the home network system shown in Fig.5, connected position (installation location) and operational condition of the appliances 4 (#1-3) can be listed on an operational screen of the communication server 6, as shown in Fig.6a. Further as shown in Fig.6b, the floor plan of a house can be shown on the screen of the communication server 6 and the communication addresses 21 - 24 allotted to the protocol conversion connector can be shown together with the pictures of the appliances 4 connected to the connectors. In such a case it is recognized at a glance which protocol conversion connector is allotted for what appliance.

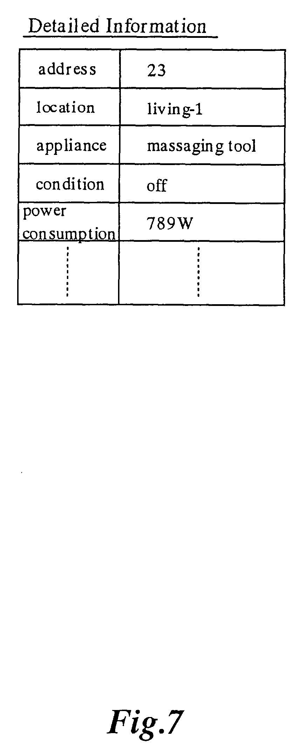

Fig.7 is a display sample in which detailed information stored in the protocol conversion connector is shown on the screen of the communication server 6. In the figure, allocated communication address : 23, installation location : living -1, kind of network-adapted appliance : massaging tool, operational condition : off, and power consumption : 789W are shown for the protocol conversion connector.

When either the network-adapted appliance 4 or the communication address 21 - 23 shown on the floor plan in Fig.6b is clicked, the display screen is switched to the detailed information as shown in Fig.7 and kinds of network-adapted appliance connected to the protocol conversion connector, its on-off condition, attribute information such as power consumption, and the room in which the appliance is installed are shown.

Therefore, the user can easily comprehend the installed location of the network-adapted appliances 4 and their operational conditions so that it becomes convenient.

If such a positional information is stored in the protocol conversion connector, it isn't required to store the positional information in the network-adapted appliance 4 and low performance specification can be used. Even if the installation location is changed, it isn't required to do maintenance of positional information of the appliance 4.

Next, setting and modifying operations of the positional information of the protocol conversion connector are explained.

In case of setting and modifying from the communication server 6, a communication address of the protocol conversion connector 10 (#1, 2, 3) to be set and modified is specified and transmission request for positional information is sent. Then the designated protocol conversion connector 10 (#1, 2, 3) returns positional information by adding own address and the received positional information is shown on the screen of the communication server 6.

In the communication server 6, positional information corresponding to the communication address is rewritten for the designated each protocol conversion connector 10 (#1, 2, 3) by the screen display and is stored in the memory of the protocol conversion connector 10 (#1, 2, 3).

The protocol conversion connector 10 (#1, 2, 3) which receives positional information in such a way rewrites and revises the already stored positional information into the transmitted positional information.

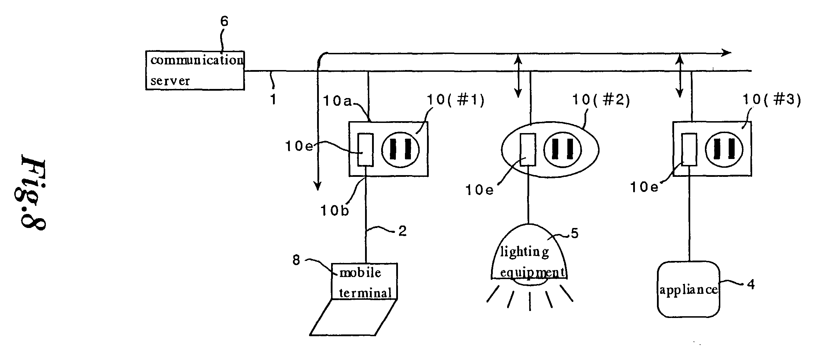

Fig.8 shows construction of a home network system using a mobile terminal unit as a network-adapted appliance.

The mobile terminal unit 8 is connected to the secondary connecting portion 10b of one protocol conversion connector 10 (#1) as a network-adapted appliance via the control line 2, the positional information of optional protocol conversion connector 10 (#1, 2, 3) connected to the information wire 1 is designed to be set and modified by operating the mobile terminal unit 8. That is, the positional information stored in the optional protocol conversion connector 10 is read out on the display screen of the mobile terminal unit 8 as mentioned above so as to be set and modified. Setting and modifying method of the positional information of the protocol conversion connector 10 isn't limited to the above-mentioned method, for example, the mobile terminal unit 8 may be directly connected to the information wire 1.

In such a home network system, communication is done between the communication server 6 and each protocol conversion connector 10 (#1, 2, 3) and between the mobile terminal unit 8 and each protocol conversion connector 10 (#1, 2, 3). Therefore, positional information can be collected per each protocol conversion connector whenever required and modifying can be easily done.

A control switch (not shown) may be provided for each protocol conversion connector 10 (#1, 2, 3) as positional information setting and modifying means and positional information per each protocol conversion connector 10 may be locally set up.

According to the above-mentioned protocol conversion connector 10 of the present invention, positional information including communication address of the protocol conversion connector 10 can be set and modified from the communication server 6 or the mobile terminal unit 8.

Further, as communication can be done between the communication server 6 and each protocol conversion connector 10 and between the mobile terminal unit 8 and each protocol conversion connector 10, positional information of desired protocol conversion connector 10 can be collected if necessary and setting and modifying can be done by easy operation.

Next, the protocol conversion connector having various kinds of additional function is explained.

Such a protocol conversion connector having additional functions is included in the present invention as another embodiments.

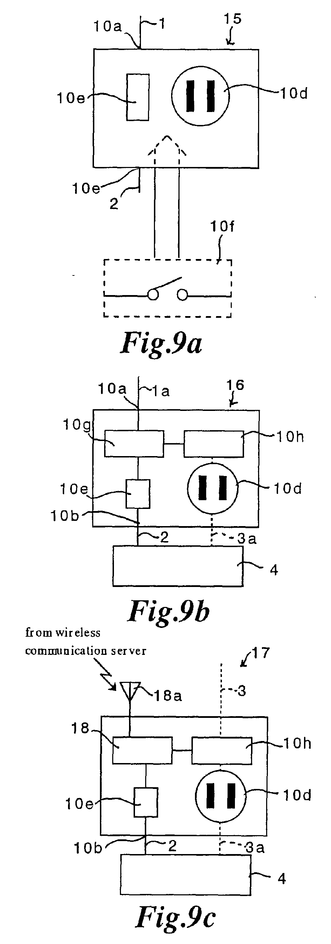

Fig.9a is a protocol conversion connector 15 having a power cut-off circuit 10f. Such a type can cut off electric source to be supplied to the network-adapted appliance 4 by operating the cut-off circuit 10f when power cut-off is requested by the communication server 6 and so on. Therefore, power saving can be achieved by cutting off standby power and further, the power can be shut off urgently even if a malfunction is occurred in the connected network-adapted appliance 4 and dangerous situation is happened wherein the appliance can't stop by itself.

Fig.9b shows a protocol conversion connector 16 used for power line carrier system in which power line carrier signals are supplied from a power line.

Such a protocol conversion connector 16 is provided with a control information/power sending and receiving circuit 10g in which the control information containing communication address and power source are separated from the power line carrier signals transmitted via the power supply line 1a, and the control signals sent from the network-adapted appliance 4 via the secondary connecting portion 10b are superimposed on the power line carrier signals transmitted to the power supply line 1a and are returned. The individual communication address is set for the protocol conversion interface 10e and protocol conversion of the control signals is executed in order to be able to send and receive the control signals between the network-adapted appliance 4 connected to the secondary connecting portion 10b and the communication server 6 connected to the power supply line 1a. Electric power separated by the control information/power sending and receiving circuit 10g is dispatched to the network-adapted appliance 4 via the feeder connecting portion 10d. The reference numeral 10h is power conversion circuit and is described later.

Fig.9c shows a protocol conversion connector 17 used for a wireless communication network system.

The protocol conversion connector 17 is adapted for a wireless communication network which sends and receives radio signals superimposed with the control signals between a wireless communication server (not shown) laid indoor. As a substitute for the primary connecting portion, a wireless signal processing unit 18 with an antenna 18a for sending and receiving the radio signals superimposed with the control signals between the wireless communication server is constructed. The network-adapted appliance 4 is connected to the secondary connecting portion 10b via the control line 2, an individual communication address is set for the protocol conversion interface 10e, and protocol conversion is executed in order to make possible to send and receive the control signals between the network-adapted appliance 4 connected to the secondary connecting portion 10b and the wireless communication server. The feeder connecting portion 10d is constructed so as to supply power source dispatched via the power line 3 to the network-adapted appliance 4 connected to the secondary connecting portion 10b via the power supply line 3a. The block indicated as a reference numeral 10h in Fig.9b and Fig.9c is a power source conversion circuit 10h. Such a circuit 10h may be constructed so as to have booster function by incorporating a booster circuit, have step-down function by incorporating a step-down circuit, or to have both functions.

It is preferable that power capacity, namely current and/or voltage can be adjusted by providing an adjustment dial for such a power source conversion circuit 10h. Thereby, even for such equipment requiring high voltage as an air conditioner, if voltage is adjusted by the adjustment dial by connecting to the secondary connecting portion 10b, such equipment can be connected and used as a network-adapted appliance 4.

Now, an indoor communication network system of the present invention is explained referring to the drawings.

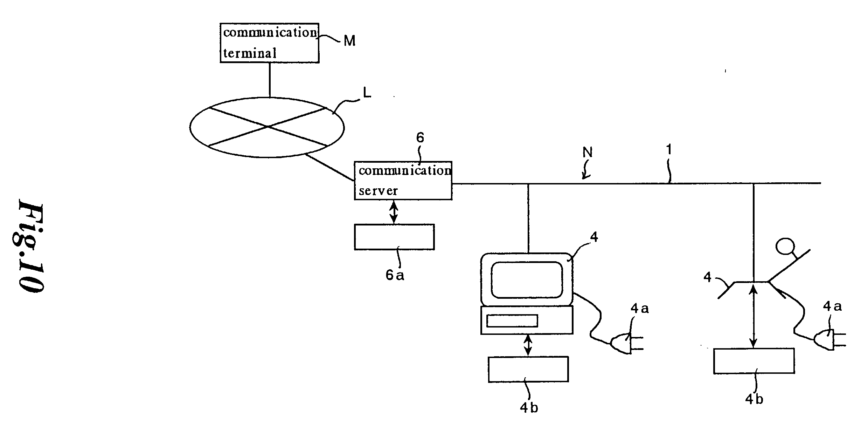

Fig.10 is an example of construction of an indoor communication network system.

The indoor communication network system N is constructed such that the communication server 6 having a user setting information storing memory 6a storing a user setting information story table and the network-adapted appliances 4 in which individual communication address is set are connected to the information wire 1 laid in structures such as a building and a house.

The network-adapted appliance 4 incorporates a communication device utilizing embedded type micro Internet interface so that two-way information transmission can be possible between the communication server 6 and the network-adapted appliances 4 in a house by means of communication protocol used in the Internet.

Therefore, it can be achieved that the appliances 4 can be remotely controlled from the communication server 6 and the data of the appliances 4 can be collected by the communication server 6. Further, the control signals can be sent and received with an external communication terminal M via a communication network like the Internet L.

A video player, a massaging tool, and so on are adapted as such network-adapted appliances 4 and current time, recording reservation information, operation mode information can be set by the user so as to facilitate usability. For that purpose, a volatile memory 4b (device memory) for storing the user setting information is provided in each appliance 4.

The user setting information isn't cleared by standby power requirement when a power switch of the appliance 4 is turned off. However, if a power plug 4a is pulled out of an outlet, power supply is stopped and the information in the memory 4b is cleared.

However according to the system of the present invention, if the plug 4a is pulled out of the outlet and power is shut off so as to economize standby power and the user setting information is cleared, the information set for the network-adapted appliance 4 is designed to be sent from the communication server 6 when the power is turned on again. Thereby the present system is characterized in that both power saving function and user-friendliness are consisted.

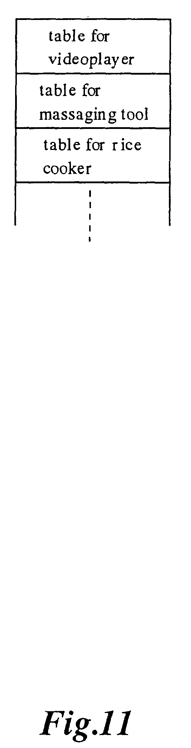

In the present invention a user setting information storage table as shown in Fig.11 is provided for the user setting information storing memory 6a of the communication server 6 in order to achieve recovery of user setting information. When the user setting information is written in the memory 4b of the appliance 4 as mentioned later, data is transmitted to the communication server 6 from the appliance 4, is stored in the table as user setting information of the appliance 4, and is stored in the memory 6a of the communication server 6. The user setting information storage table is divided as shown in Fig.11 corresponding to the communication address of the appliance so as to recover the setting information of each appliance.

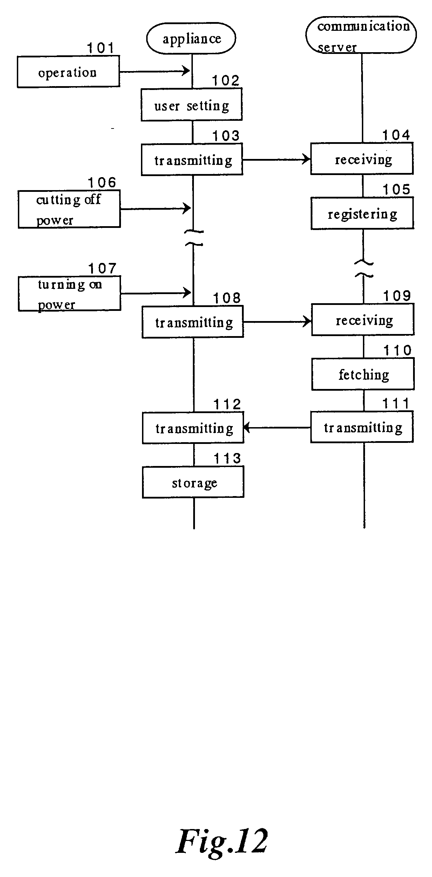

Fig.12 shows flow chart showing basic operation of communication sent and received between the network-adapted appliance 4 and the communication server 6 after the user sets information for the network-adapted appliance 4 and the power is turned off till it is turned on again.

When the network-adapted appliance 4 is connected to the information wire 1 and the user inputs user setting information such as time-shift reservation information while the power is on, the user setting information is temporally stored in the memory 4b of the network-adapted appliance 4.

When the user setting information is written or rewritten in the memory 4b, the network-adapted appliance 4 transmits the user setting information to the communication server 6 via the information wire 1. When the communication server 6 receives the information, it records and stores the sent information in the user setting information storage table (101 - 105).

Thereafter when the power to the network-adapted appliance 4 is shut off and the power of the appliance 4 on the information wire 1 is turned on again, turn on of the appliance 4 is noticed to the communication server 6.

When the communication server 6 receives the notice and detects the network-adapted appliance 4 is turned on, the user setting information registered and stored corresponding to the appliance 4 is read out from the user setting information storage table and distributed to the appliance 4. The network-adapted appliance 4 thus being distributed stores the sent user setting information in the memory 4b of the appliance 4 (106 - 113).

According to this system of the present invention as mentioned above, the user setting information stored immediately before the power is shut off is re-registered (recovered) in the memory 4b of the network-adapted appliance 4. Therefore, even if the power of the appliance 4 is turned off, the appliance 4 can be automatically recovered to the condition immediately before the power is turned off when the user uses the appliance.

The network-adapted appliance 4 may be designed to transmit user setting information periodically other than transmitting the information every time it is set. Otherwise, the information may be transmitted at a timing of shutting off of the power.

The user setting information is specified according to the function of the network-adapted appliance 4 and includes calendar, timer time, operation setting information to control various schedule such as time-shift reservation information and mode selection setting information (mode selection of massaging tool, switching of radio/tape deck, and so on), and sound volume.

If the information is time, it isn't required to transmit setting time to the communication server 6. The current time of the communication server 6 may be transmitted to the network-adapted appliance 4 from the communication server 6 when the network-adapted appliance 4 is turned on and the time may be matched.

For this purpose, it is preferable that the communication server 6 may detect turning on timing of the network-adapted appliance 4.

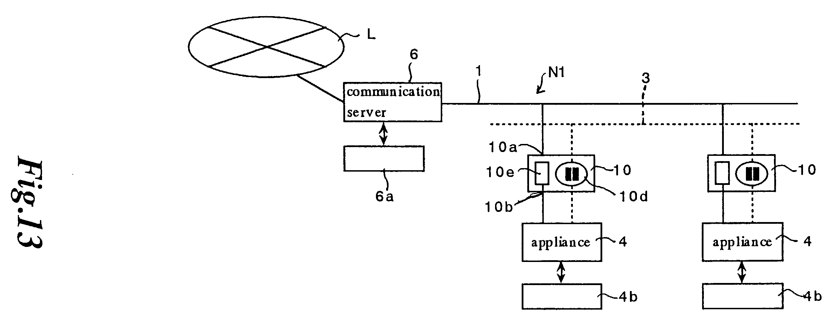

Fig.13 is an example of construction of an indoor communication network system adapting a protocol conversion connector of the present invention.

The indoor communication network system N1 is constructed with network-adapted appliances 4, the communication server 6 having the user setting information storing memory 6a, and information wire 1 having communication network-adapted protocol conversion connectors 10 in place.

According to this system, the above-mentioned protocol conversion connector 10 is used and the feeder connecting portion 10d thereof is connected with the power plug (not shown) of the network-adapted appliance 4 so as to supply power to the appliance 4 introduced from the power line 3. At the same time the control signals is sent and received to the network-adapted appliance 4 via the information wire 1.

Therefore, according to the system adapting the above-mentioned protocol conversion connector 10, if the communication protocols of the control signals sent and received between the information wire 1 and the network-adapted appliance 4 are changed, the appliance 4 can be used as it is without upgrading function because protocol is converted by the protocol conversion connecter 10, thereby the burden of expense is relieved.

Further according to this system, the network-adapted protocol conversion connector 15 having the power cut-off circuit 10f as mentioned above may be used. In such a case, power can be shut off upon requesting power cut off from the communication server 6 because of the function of the power cut-off circuit 10f of the protocol conversion connector 15. Therefore, power saving can be achieved by cutting off standby power without removing the power supply plug from the protocol conversion connector 15. Moreover, even if under dangerous condition wherein malfunction of the connected network-adapted appliance 4 is occurred and the appliance 4 can't stop by itself, power supply can be shut off from the supervising communication server 6.

Further, power can be shut off by sending control signals following the time schedule prepared in advance from the communication server 6. However, as the user setting information is stored in the communication server 6, it isn't cleared even after urgent power shut off of the network adapted appliance 4 and the user can operate the appliance 4 continuously after turning on the power.

The above-mentioned systems use wired information network. However, a power line for transmitting power line carrier control signals or wireless system such as infra-red radiation and Bluetooth system may be employed instead of the information wire. Such a system is simultaneously proposed in the present invention.

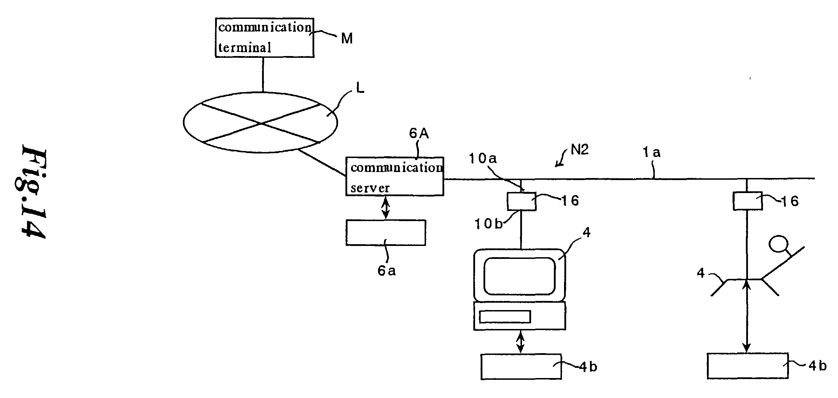

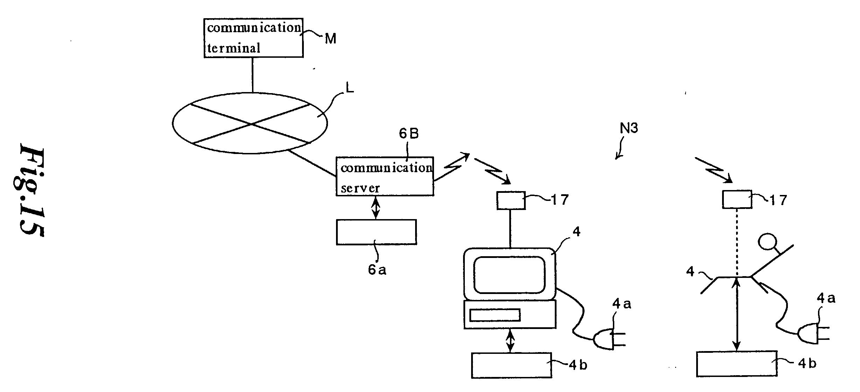

Finally, such power carrier method and wireless network system are explained referring to Fig.14 and Fig.15.

Fig.14 shows basic construction of the power line carrier type indoor communication network system N2. In this system, the power line carrier signals superimposed with the control signals to the power source having predetermined wave shape is fed to the power supply line 1a from a power line carrier type communication server 6A. Therefore, in case of the power line carrier type indoor communication network in which the primary connecting portion 10a of the above-mentioned protocol conversion connector 16 is adapted for the power supply line 1a, the connector 16 separates the power line carrier signals into control signals and electric power, decodes the control signals, transmits it as control signals to the network-adapted appliance 4 connected to the secondary connecting portion 10b via the protocol conversion interface. Contrary, the control signals sent from the network-adapted appliance 4 are sent by superimposing to the power line carrier signals transmitted to the power line 1a.

According to this system, as the control signals are carried by means of the power supply line 1a, the information wire for control signals isn't required and only the power supply line 1a is connected between the communication server 6A and the protocol conversion connector 16, so that the burden of wire at a time of construction can be removed.

Fig.15 shows basic construction of wireless type indoor communication network system. In this system N3, a wireless communication server 6B having the above-mentioned memory 6a transmits control signals wirelessly to the network-adapted appliance 4. As it doesn't need information wire, the network-adapted appliances 4 can be easily incorporated to the indoor communication network.

According to such an indoor communication network system, when the user setting information of the network-adapted appliance 4 is set and changed, the user setting information per the network-adapted appliance 4 is stored in the memory 6a of the communication server 6B. Further when the power of the appliance 4 is turned on again, the stored user setting information is read out from the memory 6a and transmitted to the appliance 4. Therefore, even when the power of the appliance 4 is turned on again after the power is turned off, the appliance 4 is immediately returned to its condition before the power is turned off and the user can use the appliance 4 after turning it on without being conscious of the communication server 6B.

Therefore, the user doesn't need to operate user setting again after tuning on the power so that it is very convenient. Further, the power plug can be removed out of the outlet so that standby power isn't consumed in vain and power saving effect is increased.

Further according to the system, even such a network-adapted appliance incorporating low price communication device capable of one to one normal communication can be connected to a communication network having high-functional communication system so that the communication network connection of low price appliances can be achieved with reasonable cost. Furthermore, like the system mentioned above, the network-adapted appliance can be continuously used as it is by replacing into the protocol conversion connector corresponding to a new communication protocol even if communication protocol is changed so that maintenance fee can be reduced.

## Claims

1. A communication network-adapted protocol conversion connector adapted for attaching to a communication network laid in buildings such as office building, dwelling house and the like, said connector comprising:
a primary connecting portion to be connected to said communication network laid indoors,
a secondary connecting portion to be connected to a network-adapted appliance,
a protocol conversion interface to convert the protocol for control signals to be sent and received between said communication network and said network-adapted appliance, and
a feeder connecting portion to feed electric power to said network-adapted appliance to be connected to said secondary connecting portion.

2. The connector of claim 1, wherein said communication network comprises an information wire laid indoors and connected to a communication server, wherein said primary connecting portion is connected to said information wire while said secondary connecting portion is connected to said network-adapted appliance, and wherein said protocol conversion interface is set an individual communication address and converts the protocol for control signals to make it possible to send and receive said control signals between said network-adapted appliance connected to said secondary connecting portion and said communication server connected to said information wire, further wherein said feeder connecting portion supplies said network-adapted appliance with electric power from a power line laid indoors.

3. The connector of claim 1, further comprising a control information/ power sending and receiving circuit, wherein said communication network comprises a power line laid indoors and connected to a communication server, for sending power line carrier signals which are superimposed with control signals and power source, wherein said primary connecting portion is connected to said power line while said secondary connecting portion is connected to said network-adapted appliance, and wherein said control information/power sending and receiving circuit separates control signals and power source from said power line carrier signals, sent in through said power line and sends back the control signals, superimposed with said power line carrier signals, sent out from said network-adapted appliance through said secondary connecting portion, further wherein said protocol conversion interface is set an individual communication address, converts the protocol for control signals to make it possible to send and receive the control signals between said network-adapted appliance connected to said secondary connecting portion and said communication server connected to said power line and said feeder connecting portion supplies said network-adapted appliance with electric power separated by said control information/power sending and receiving circuit.

4. The connector of claim 1, wherein said communication network comprises a wireless communication network for sending and receiving radio signals superimposed control signals therewith between a wireless communication server installed indoors, wherein said primary connecting portion constitutes a wireless signal processing unit for sending and receiving radio signals superimposed the control signals therewith between said wireless communication server while said secondary connecting portion is connected to said network-adapted appliance, and wherein said protocol conversion interface is set an individual communication address and converts the protocol for control signals to make it possible to send and receive the control signals between said network-adapted appliance connected to said secondary connecting portion and said wireless communication server, further wherein said feeder connecting portion supplies said network-adapted appliance with electric power from a power line laid indoors.

5. The connector of claim 2 or 3, further comprising a power cut-off circuit which is controlled by the control signals sent in through said information wire or said power line or by the control signals sent in from said network-adapted appliance connected to said secondary connecting portion.

6. The connector of claim 4, further comprising a power cut-off circuit which is controlled by the control signals sent in through said wireless communication server or by control signals sent in from said network-adapted appliance connected to said secondary connecting portion.

7. The connector of any one of claim 1 to 3, wherein said protocol conversion connector has a position information storing memory in which positional information contained in the control signals, corresponding to said individual communication address is rewritably saved, said control signals being received at said primary connecting portion through said network or received at said secondary connecting portion from said network-adapted appliance.

8. The connector of claim 4, wherein said protocol conversion connector has a position information storing memory in which positional information contained in the control signals, corresponding to said individual communication address is rewritably saved, said control signals being received at said primary connecting portion through said wireless communication server or received at said secondary connecting portion from said network-adapted appliance.

9. The connector of one of claim 1 to 4, further comprising a power source conversion circuit which converts the voltage and/or current to be supplied to said network-adapted appliance from said feeder connecting portion.

10. An indoor communication network system comprising a communication network to which a communication server and plural network-adapted appliances, each set an individual communication address, are connected and laid in buildings such as office building, dwelling house, or the like, wherein each of said network-adapted appliance comprises a device memory for temporarily storing user setting information registered individually, wherein said communication server detects the activation of power to network-adapted appliances connected to said communication network, and is provided with a user setting information storing memory for registering and storing user setting information temporarily saved on said memories of said network-adapted appliances, whereby said communication server, when user setting information is written or rewritten on said memory of any one of said network-adapted appliances, receives user setting information from the corresponding network-adapted appliance and stores said information on said table, and further said communication server detects the activation of power to any one of the network-adapted appliances, said communication server reads out the corresponding user setting information registered and stored for said corresponding network-adapted appliance from said user setting information memory to enable said network-adapted appliance to write said user setting information on its device memory.

11. The system of claim 10, wherein said communication network comprises an information wire to which a protocol conversion connectors is attached at a suitable place, whereby when said communication server detects the activation of power to any one of the network-adapted appliances, said communication server reads out and sends out to said information wire the corresponding user setting information registered and stored for the corresponding network-adapted appliance from said user setting information memory to enable said network-adapted appliance to write said user setting information on its device memory.

12. The system of claim 10, wherein said communication network comprises a power line to which a communication server installed indoors is connected and control signals is transmitted together with electric power, whereby when said communication server detects the activation of power to any one of the network-adapted appliances, said communication server reads out and sends out to said power line the corresponding user setting information registered and stored for the corresponding network-adapted appliance from said user setting information memory to enable said network-adapted appliance to write said user setting information on its device memory.

13. The system of claim 10, wherein said communication network comprises a wireless communication system in which radio signals are sent and received between a wireless communication server installed indoors and wireless signal processing units provided at a protocol conversion connector for controlling said network-adapted appliances, whereby when said wireless communication server detects the activation of power to any one of the network-adapted appliances, said wireless communication server reads out the corresponding user setting information registered and stored for the corresponding network-adapted appliance from said user setting information memory and converts it into radio signals then sends out it to said wireless communication system to enable said network-adapted appliance to write said user setting information on its device memory.

14. The system of claim 11, wherein said information wire is provided at a stable place with a protocol conversion connector, said protocol conversion connector comprising a primary connecting portion to be connected to said communication network laid indoors, a secondary connecting portion to be connected to a network-adapted appliance, a protocol conversion interface to convert the protocol for control signals sent in and received between said communication network and said network-adapted appliances, and a feeder connecting portion to feed electric power laid indoors to said network-adapted appliance to be connected to said secondary connecting portion.

15. The system of claim 12, wherein said power line is provided at a stable place with a protocol conversion connector for separating the control signals and power source from said power line carrier signals, said protocol conversion connector comprising a primary connecting portion to be connected to said communication network laid indoors, a secondary connecting portion to be connected to a network-adapted appliance, a protocol conversion interface to convert the protocol for control signals sent and received between a communication server connected to said power line or a communication network laid outdoors and said network-adapted appliance, and a feeder connecting portion to feed electric power to said network-adapted appliance to be connected to said secondary connecting portion.

16. The system of claim 13, wherein said communication network comprises wireless network system in which wireless control signals are sent and received between said wireless communication server installed indoors and a wireless protocol conversion connector, said wireless protocol conversion connector comprising a radio signal processing unit for sending and receiving radio signals to and from said wireless communication server, a secondary connecting portion to be connected to a network-adapted appliance, a protocol conversion interface to convert the protocol for control signals sent and received between said wireless communication server and said network-adapted appliances, and a feeder connecting portion, connected to said power line, to feed power to said network-adapted appliance to be connected to said secondary connecting portion.

17. The system of claim 11 or 12, wherein said protocol conversion connector further comprises a power cut-off circuit which is controlled by the control signals received at said primary connecting portion or the control signals sent out from said network-adapted appliance connected to said secondary connecting portion.

18. The system of claim 13, wherein said wireless protocol conversion connector further comprises a power cut-off circuit which is controlled by the control signals received at said wireless signal processing unit or the control signals sent out from said network-adapted appliance connected to said secondary connecting portion.

19. The system of claim 11 or 12, wherein said user setting information temporally saved in said device memory provided at said network-adapted appliance contains setting information for schedule control of said network-adapted appliance.

20. The system of claim 13, wherein said user setting information temporally saved in said device memory provided at said network-adapted appliance contains setting information for schedule control of said network-adapted appliance.
